# EUROPÄISCHE PATENTSCHRIFT

(11) **EP 3 487 752 B1**
(45) Veröffentlichungstag und Bekanntmachung des Hinweises auf die Patenterteilung: **01.09.2021**
(21) Anmeldenummer: 17726302.7
(22) Anmeldetag: 29.05.2017
(51) Int. Cl.: B62J 17/04

(54) **WINDSCHILDS EINES KRAFTRADS MIT VERSTELLEINRICHTUNG**
WINDSCREEN OF MOTORCYCLE WITH ADJUSTING-MECHANISM
PARE-BRISE POUR MOTO AVEC MÉCANISME DÉ REGLAGE

(30) Priorität: 22.07.2016 DE 102016213479
(43) Veröffentlichungstag der Anmeldung: 29.05.2019
(73) Patentinhaber: Bayerische Motoren Werke Aktiengesellschaft, 80809 München (DE)
(72) Erfinder: REINHART, Peter, 82380 Peissenberg (DE)
(86) Internationale Anmeldenummer: PCT/EP2017/062839
(87) Internationale Veröffentlichungsnummer: WO 2018/015052

(56) Entgegenhaltungen:
- EP-A1- 3 061 681
- DE-A1- 3 609 595
- DE-A1-102004 032 241
- DE-U1- 20 110 017

## Beschreibung

Die Erfindung betrifft eine Verstelleinrichtung zum Verstellen eines Windschilds eines Kraftrads, die Verstelleinrichtung aufweisend eine kraftradseitige Tragstruktur, einen relativ zu der Tragstruktur verlagerbaren Windschildhalter und wenigstens ein zwischen dem Windschildhalter und der Tragstruktur wirksames Hebelelement. Außerdem betrifft die Erfindung eine Windschildanordnung für ein Kraftrad. Außerdem betrifft die Erfindung ein Kraftrad.

Aus der DE 10 2004 032 241 A1 ist ein Windschild bekannt, das über einen Hebelmechanismus mit einem Motorrad verbunden ist, wobei der Hebelmechanismus eine Verstellung der Windschildposition ermöglicht und einen ersten Schwenkhebel und einen zweiten Schwenkhebel aufweist, wobei der erste Schwenkhebel über ein erstes Schwenkgelenk und der zweite Schwenkhebel über ein zweites Schwenkgelenk schwenkbar mit dem Motorrad verbunden ist und der erste Schwenkhebel über ein drittes Schwenkgelenk schwenkbar mit dem Windschild verbunden ist, bei dem der zweite Schwenkhebel über Zwischenhebel mit dem ersten Schwenkhebel und mit dem Windschild verbunden ist.

Aus der DE 10 2005 005 681 A1 ist ein Motorrad bekannt mit einem Verkleidungshalter, der ein erstes und ein zweites Verkleidungshalterteil aufweist, wobei ein hinteres Ende des ersten Verkleidungshalterteils mit einem Rahmen des Motorrads verbunden ist und ein vorderes Ende des ersten Verkleidungshalterteils mit dem zweiten Verkleidungshalterteil verbunden ist, und wobei ein Windschild an dem zweiten Verkleidungshalterteil fixiert ist bei dem das Windschild verschieblich an dem zweiten Verkleidungshalterteil befestigt ist.

Aus der DE 10 2012 211 182 A1 ist eine Verstelleinrichtung bekannt zum Verstellen eines Windschildes eines Fahrzeuges, insbesondere eines Motorrades, mit einem mit dem Windschild verbindbaren Windschildhalter, einer fahrzeugseitig befestigbaren Trägerstruktur, einer Schubkurbel, wobei die Schubkurbel um eine erste Schwenkachse schwenkbar mit der Trägerstruktur und um eine zweite Schwenkachse schwenkbar mit dem Windschildhalter verbunden ist, sowie einer Linearführung, wobei der Windschildhalter mittels einer Schwenklageranordnung linearbeweglich in einer Längsrichtung von der Linearführung geführt sowie um eine dritte Schwenkachse schwenkbar ist, wobei die erste, zweite und dritte Schwenkachse parallel zueinander ausgerichtet sind.

Aus der gattungsgemässen DE 201 10 017 U1 ist ein Aufstellhebel bekannt für ein Windschild an einem Motorrad BMW K 1200 RS, wobei am beweglichen Haltearm des Windschildes eine Haltestange montiert ist und dadurch mit Hebelwirkung das Windschild nach oben verstellt wird.

Der Erfindung liegt die Aufgabe zugrunde, eine eingangs genannte Verstelleinrichtung baulich und/oder funktional zu verbessern. Außerdem liegt der Erfindung die Aufgabe zugrunde, eine eingangs genannte Windschildanordnung baulich und/oder funktional zu verbessern. Außerdem liegt der Erfindung die Aufgabe zugrunde, ein eingangs genanntes Kraftrad baulich und/oder funktional zu verbessern.

Die Lösung der Aufgabe erfolgt mit einer Verstelleinrichtung mit den Merkmalen des Anspruchs 1.

Die Tragstruktur kann zur festen Verbindung mit einem Kraftrad dienen. Die Tragstruktur kann zur lösbaren oder unlösbaren Verbindung mit einem Kraftrad dienen. Der Windschildhalter kann Aufnahmen für ein Windschild aufweisen. Der Windschildhalter kann höhenverstellbar sein. Der Windschildhalter kann verschiebbar und/oder verschwenkbar sein. Das wenigstens eine Hebelelement kann einerseits mit der Tragstruktur und andererseits mit dem Windschildhalter verschwenkbar verbunden sein. Das wenigstens eine Hebelelement kann eine an dem Windschildhalter angeordnete erste Hebelelementdrehachse aufweisen. Das wenigstens eine Hebelelement kann eine an der Tragstruktur angeordnete zweite Hebelelementdrehachse aufweisen. Die erste Hebelelementdrehachse und die zweite Hebelelementdrehachse können zueinander parallel angeordnet sein.

Der Betätigungshebel und das wenigstens eine Hebelelement sind einstückig hergestellt.

Der Lastarm und der Kraftarm können zueinander koaxial oder achsparallel angeordnet sein. Der Lastarm und das wenigstens eine Hebelelement sind axial zueinander angeordnet. Der Lastarm und das wenigstens eine Hebelelement können zueinander achsparallel angeordnet sein. Die Hebelelementdrehachse und die Betätigungshebeldrehachse können zueinander koaxial angeordnet sein.

Eine Länge des Lastarms und eine Länge des Kraftarms ist derart aufeinander abgestimmt, dass über einen Verstellweg eine zumindest annähernd gleichbleibende Betätigungskraft erforderlich ist. Der Kraftarm kann eine größere Länge als der Lastarm aufweisen.

Die Verstelleinrichtung kann ein erstes Hebelelement, ein zu dem ersten Hebelelement paralleles zweites Hebelelement und einen einzigen Betätigungshebel aufweisen. Die Verstelleinrichtung kann ein erstes Hebelelement, ein zu dem ersten Hebelelement paralleles zweites Hebelelement, einen ersten Betätigungshebel und einen zweiten Betätigungshebel aufweisen.

Außerdem wird die der Erfindung zugrundeliegende Aufgabe gelöst mit einer Windschildanordnung mit den Merkmalen des Anspruchs 3.

Die Windschildanordnung kann zu Anordnung an einem Kraftrad dienen. Die Windschildanordnung kann mit einem Kraftrad fest verbunden sein. Die Windschildanordnung kann mit einem Kraftrad lösbar oder unlösbar verbunden sein. Die Windschildanordnung kann zur Serienausstattung des Kraftrads gehören. Die Windschildanordnung kann eine Sonderausstattung des Kraftrads sein. Die Windschildanordnung kann nachrüstbar sein. Das Windschild kann mit dem Windschildhalter fest verbunden sein. Das Windschild kann mit dem Windschildhalter lösbar oder unlösbar verbunden sein. Das Windschild kann auswechselbar sein. Außerdem wird die der Erfindung zugrundeliegende Aufgabe gelöst mit einem Kraftrad mit den Merkmalen des Anspruchs 4.

Das Kraftrad kann ein Motorrad, ein Motorroller, ein Scooter, ein Elektromotorroller oder ein E-Scooter sein. Das Kraftrad kann eine Antriebsmaschine aufweisen. Die Antriebsmaschine kann eine Brennkraftmaschine sein. Die Brennkraftmaschine kann insbesondere ein Einzylindermotor, ein Zweizylindermotor, ein Vierzylindermotor oder ein Sechszylindermotor sein. Ein Zweizylindermotor kann insbesondere als Reihenmotor, Twinmotor oder Boxermotor ausgeführt sein. Ein Vierzylindermotor kann insbesondere als Reihenmotor ausgeführt sein. Ein Sechszylindermotor kann insbesondere als Reihenmotor ausgeführt sein.

Das Kraftrad kann ein Cockpit aufweisen. Das Kraftrad kann ein Kombiinstrument aufweisen. Das Kombiinstrument kann in dem Cockpit angeordnet sein. Das Kombiinstrument kann vor einem Lenker des Kraftrads angeordnet sein. Das Kombiinstrument kann zumindest annähernd mittig angeordnet sein. Das Kraftrad kann einen Halter für ein Navigationssystem aufweisen. Der Halter kann oberhalb des Kombiinstruments angeordnet sein. Der Halter kann in dem Cockpit angeordnet sein. Der wenigstens eine Betätigungshebel kann seitlich des Kombiinstruments angeordnet sein. Der wenigstens eine Betätigungshebel kann seitlich des Halters angeordnet sein. Das Windschild kann vor dem Cockpit angeordnet sein.

Zusammenfassend und mit anderen Worten dargestellt ergibt sich somit durch die Erfindung unter anderem eine Handverstellung Windschildverstellung. Eine Betätigung der Windschildverstellung kann an einem für den Kunden festgelegten Hebel ermöglicht werden. Dieser Hebel kann gleichermaßen der über den Drehpunkt verlängerte hintere Hebel der Windschildverstellung sein.

Mit der Erfindung wird ein Verkratzen eines Windschilds verhindert. Ein Verstellen eines Windschilds mit einer behandschuhten Hand wird erleichtert. Eine erforderliche Betätigungskraft kann auf eine Dimension und Form eines Windschilds abgestimmt werden. Eine Betätigungskraft kann auch bei unterschiedlich dimensionierten oder unterschiedlich geformten Windschildern zumindest annähernd gleich sein. Eine Betätigung kann auch bei einem vorhandenen Navigationssystem vereinfacht oder ermöglicht sein.

Nachfolgend wird ein Ausführungsbeispiel der Erfindung unter Bezugnahme auf Figuren näher beschrieben. Aus dieser Beschreibung ergeben sich weitere Merkmale und Vorteile.

Es zeigen schematisch und beispielhaft:
- Fig. 1: ein Motorrad mit einem verstellbaren Windschild in einer abgesenkten Position und
- Fig. 2: ein Motorrad mit einem verstellbaren Windschild in einer angehobenen Position.

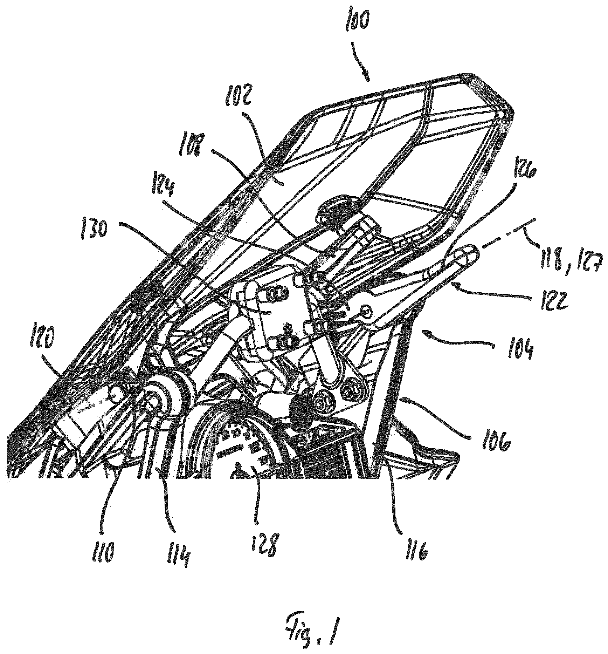

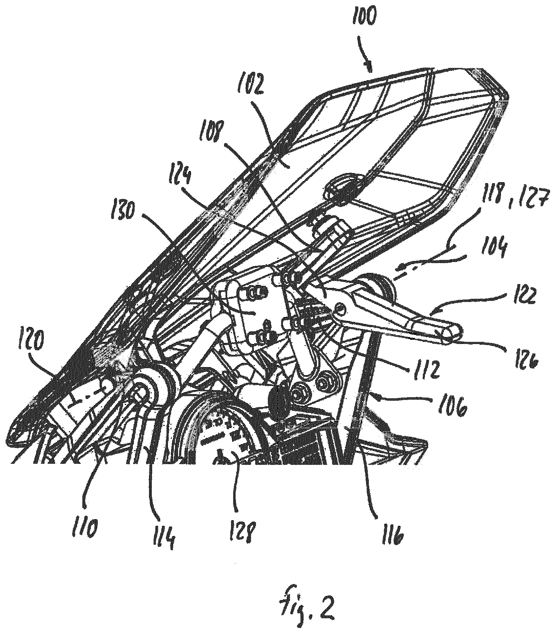

Fig. 1 zeigt ein Motorrad 100 mit einem verstellbaren Windschild 102 in einer abgesenkten Position. Fig. 2 zeigt das Motorrad 100 mit dem verstellbaren Windschild 102 in einer angehobenen Position.

Das Windschild 102 ist mithilfe einer Verstelleinrichtung 104 an dem Motorrad 100 angeordnet. Die Verstelleinrichtung 104 weist eine Tragstruktur 106, einen Windschildhalter 108 und zwei zwischen der Tragstruktur 106 und dem Windschildhalter 108 wirksame Hebelelemente 110, 112 auf.

Die Tragstruktur 106 ist fest mit einem Fahrgestell des Motorrads 100 verbunden und weist zwei bügelförmige Verbindungsabschnitte 114, 116 für die Hebelelemente 110, 112 auf. Der Windschildhalter 108 weist Aufnahmen, wie 114, für das Windschild 102 auf. Die Hebelelemente 110, 112 sind jeweils einerseits mit der Tragstruktur 106 und andererseits mit dem Windschildhalter 108 gelenkig verbunden. Die Hebelelemente 110, 112 sind jeweils um eine an der Tragstruktur 106 angeordnete erste Hebelelementdrehachse 118 und um eine an dem Windschildhalter 108 angeordnete zweite Hebelelementdrehachse 120 verschwenkbar. Die Hebelelementdrehachsen 118, 120 sind zueinander parallel angeordnet. Damit ist das Windschild 102 höhenverstellbar und/oder verschwenkbar. Bei einem Verstellen des Windschilds 102 verschwenken die Hebelelemente 110, 112 parallel.

Die Verstelleinrichtung 104 weist einen Betätigungshebel 122 auf. Der Betätigungshebel 122 ist mit dem Hebelelement 112 fest verbunden bzw. mit dem Hebelelement 112 einstückig hergestellt. Der Betätigungshebel 122 weist einen Lastarm 124 und einen Kraftarm 126 auf. Der Lastarm 124 und das Hebelelement 112 sind zueinander koaxial. Der Betätigungshebel 122 ist zusammen mit dem Hebelelement 112 um die erste Hebelelementdrehachse 118 verschwenkbar. Die Hebelelementdrehachse 118 ist damit zugleich auch eine Betätigungshebeldrehachse 127. Der Kraftarm 126 ist endseitig zur Betätigung durch einen Fahrer ausgeführt. Der Betätigungshebel 122 ist vorliegend in einem Spritzverfahren aus einem Kunststoff hergestellt.

Das Motorrad 100 weist ein Cockpit mit einem Kombiinstrument 128 und einen Halter 130 für ein Navigationssystem auf. Das Kombiinstrument 128 und der Halter 130 sind in Fahrtrichtung hinter dem Windschild 102 angeordnet. Das Kombiinstrument 128 und der Halter 130 sind zwischen den Verbindungsabschnitten 114, 116 angeordnet. Der Betätigungshebel 122 ist seitlich des Halters 130 angeordnet.

### Bezugszeichen

- 100: Motorrad
- 102: Windschild
- 104: Verstelleinrichtung
- 106: Tragstruktur
- 108: Windschildhalter
- 110: Hebelelement
- 112: Hebelelement
- 114: Verbindungsabschnitt
- 116: Verbindungsabschnitt
- 118: Hebelelementdrehachse
- 120: Hebelelementdrehachse
- 122: Betätigungshebel
- 124: Lastarm
- 126: Kraftarm
- 127: Betätigungshebeldrehachse
- 128: Kombiinstrument
- 130: Halter

## Patentansprüche

1. Verstelleinrichtung (104) zum Verstellen eines Windschilds (102) eines Kraftrads (100), die Verstelleinrichtung (104) aufweisend eine kraftradseitige Tragstruktur (106), einen relativ zu der Tragstruktur (106) verlagerbaren Windschildhalter (108) und wenigstens ein zwischen dem Windschildhalter (108) und der Tragstruktur (106) wirksames Hebelelement (110, 112), wobei die Verstelleinrichtung (104) wenigstens einen Betätigungshebel (122) mit einer an der Tragstruktur (106) angeordnete Betätigungshebeldrehachse (127), einem Lastarm (124) und einem manuell betätigbaren Kraftarm (126) aufweist, der Kraftarm (126) endseitig zur Betätigung durch einen Fahrer ausgeführt ist und eine Länge des Lastarms (124) und eine Länge des Kraftarms (126) unter Berücksichtigung einer erforderlichen Betätigungskraft zum Verstellen eines Windschilds (102) aufeinander abgestimmt sind, **dadurch gekennzeichnet**
**dass** der Lastarm (124) und der Kraftarm (126) zueinander winklig oder windschief angeordnet sind, der Betätigungshebel (122) und das wenigstens eine Hebelelement (110, 112) einstückig hergestellt sind, der Lastarm (124) und das Hebelement (112) zueinander koaxial sind, der Betätigungshebel (122) zusammen mit dem Hebelement (112) um eine erste Hebelelementdrehachse (118) verschwenkbar ist, die mit der Betätigungshebeldrehachse (127) zusammenfällt.

2. Verstelleinrichtung (104) nach wenigstens einem der vorhergehenden Ansprüche, **dadurch gekennzeichnet, dass** die Verstelleinrichtung (104) das erste Hebelelement (112), ein zu dem ersten Hebelelement (112) paralleles zweites Hebelelement (110) und einen einzigen Betätigungshebel (122) aufweist.

3. Windschildanordnung für ein Kraftrad (100), **dadurch gekennzeichnet, dass** die Windschildanordnung eine Verstelleinrichtung (104) nach wenigstens einem der vorhergehenden Ansprüche und ein an dem Windschildhalter (108) angeordnetes Windschild (102) aufweist.

4. Kraftrad (100), **dadurch gekennzeichnet, dass** das Kraftrad (100) eine Windschildanordnung nach Anspruch 3 aufweist.

5. Kraftrad (100) nach Anspruch 4, **dadurch gekennzeichnet, dass** das Kraftrad (100) ein Kombiinstrument (128) aufweist und der wenigstens eine Betätigungshebel (122) seitlich des Kombiinstruments (128) angeordnet ist.

## Claims

1. Adjusting device (104) for the adjustment of a windscreen (102) of a motorcycle (100), the adjusting device (104) having a motorcycle-side supporting structure (106), a windscreen holder (108) which can be moved relative to the supporting structure (106), and at least one lever element (110, 112) which acts between the windscreen holder (108) and the supporting structure (106), the adjusting device (104) having at least one actuating lever (122) with an actuating lever rotational axis (127) which is arranged on the supporting structure (106), a load arm (124) and a manually actuable power arm (126), the power arm (126) being configured on the inside for the actuation by way of a rider, and a length of the load arm (124) and a length of the power arm (126) being adapted to one another with consideration of the required actuating force for adjusting a windscreen (102), **characterized in that** the load arm (124) and the power arm (126) are arranged at an angle or in a skewed manner with respect to one another, the actuating lever (122) and the at least one lever element (110, 112) are produced in one piece, the load arm (124) and the lever element (112) are coaxial with respect to one another, and the actuating lever (122) can be pivoted together with the lever element (112) about a first lever element rotational axis (118) which coincides with the actuating lever rotational axis (127).

2. Adjusting device (104) according to at least one of the preceding claims, **characterized in that** the adjusting device (104) has the first lever element (112), a second lever element (110) which is parallel to the first lever element (112), and a single actuating lever (122).

3. Windscreen arrangement for a motorcycle (100), **characterized in that** the windscreen arrangement has an adjusting device (104) according to at least one of the preceding claims and a windscreen (102) which is arranged on the windscreen holder (108).

4. Motorcycle (100), **characterized in that** the motorcycle (100) has a windscreen arrangement according to Claim 3.

5. Motorcycle (100) according to Claim 4, **characterized in that** the motorcycle (100) has an instrument cluster (128), and the at least one actuating lever (122) is arranged on the side of the instrument cluster (128).

## Revendications

1. Dispositif de réglage (104) destiné à régler un pare-brise (102) d'une motocyclette (100), le dispositif de réglage (104) comportant une structure de support côté motocyclette (106), un support de pare-brise (108) déplaçable par rapport à la structure de support (106) et au moins un élément à levier (110, 112) agissant entre le support de pare-brise (108) et la structure de support (106), le dispositif de réglage (104) comportant au moins un levier d'actionnement (122) pourvu d'un axe de rotation de levier d'actionnement (127) disposé sur la structure de support (106), un bras de charge (124) et un bras de puissance (126) actionnable manuellement,
le bras de puissance (126) étant conçu côté extrémité pour être actionné par un conducteur et une longueur du bras de charge (124) et une longueur du bras de puissance (126) étant adaptées l'une à l'autre avec prise en compte d'une force d'actionnement requise pour régler un pare-brise (102), **caractérisé en ce que** le bras de charge (124) et le bras de force (126) sont disposés angulairement ou de manière inclinée l'un par rapport à l'autre, le levier d'actionnement (122) et l'au moins un élément à levier (110, 112) sont réalisés d'une seule pièce, le bras de charge (124) et l'élément à levier (112) sont coaxiaux l'un à l'autre, le levier d'actionnement (122) peut pivoter conjointement avec l'élément à levier (112) sur un premier axe de rotation d'élément à levier (118) qui coïncide avec l'axe de rotation de levier d'actionnement (127).

2. Dispositif de réglage (104) selon l'une au moins des revendications précédentes, **caractérisé en ce que** le dispositif de réglage (104) comprend le premier élément à levier (112), un deuxième élément à levier (110) parallèle au premier élément à levier (112) et un levier d'actionnement unique (122).

3. Ensemble formant pare-brise destiné à une motocyclette (100), **caractérisé en ce que** l'ensemble formant pare-brise comporte un dispositif de réglage (104) selon l'une au moins des revendications précédentes et un pare-brise (102) disposé sur le support de pare-brise (108).

4. Motocyclette (100), **caractérisée en ce que** la motocyclette (100) comporte un ensemble formant pare-brise selon la revendication 3.

5. Motocyclette (100) selon la revendication 4, **caractérisée en ce que** la motocyclette (100) comporte un combiné d'instruments (128) et l'au moins un levier d'actionnement (122) est disposé latéralement au combiné d'instruments (128).
